# EUROPÄISCHE PATENTSCHRIFT

(11) **EP 0 781 382 B1**
(45) Veröffentlichungstag und Bekanntmachung des Hinweises auf die Patenterteilung: **25.11.1998**
(21) Anmeldenummer: 96917402.8
(22) Anmeldetag: 22.05.1996
(51) Int. Cl.: F16B 35/06

(54) **SENKKOPFSCHRAUBE**
COUNTERSUNK HEAD SCREW
VIS A TETE FRAISEE

(30) Priorität: 29.05.1995 DE 29508852 U
(43) Veröffentlichungstag der Anmeldung: 02.07.1997
(73) Patentinhaber: EJOT VERBINDUNGSTECHNIK GmbH & Co. KG, D-57334 Bad Laasphe (DE)
(72) Erfinder: KÖNIG, Gottfried, D-57334 Bad Laasphe (DE)
(74) Vertreter: Bardehle, Heinz, Dipl.-Ing.
(86) Internationale Anmeldenummer: EP9602203
(87) Internationale Veröffentlichungsnummer: WO9638676

(56) Entgegenhaltungen:
- DE-A- 3 334 212
- GB-A- 2 227 540
- US-A- 3 370 631
- US-A- 5 199 839

## Beschreibung

Die Erfindung bezieht sich auf eine Senkkopfschraube mit an der konischen Unterseite ihres Schraubenkopfes angeordneten, gegenüber der Unterseite vorspringenden, in gerader Anzahl vorhandenen Rippen mit Senkschneiden.

Eine derartige Senkkopfschraube ist in der Lage, mittels ihrer Rippen in einem Werkstück die Senkung für den Senkkopf der Schraube freizuschneiden. Derartige Senkkopfschrauben sind beispielsweise aus dem DE-U-9 202 650 und der DE-A-3 334 212 bekannt. Beiden Senkkopfschrauben ist gemeinsam, daß sie eine gerade Zahl von untereinander gleichen, radial verlaufenden Rippen aufweisen, wobei es gemäß der ersteren der Druckschrift darauf ankommt, eine größere Zahl von Rippen, nämlich mehr als 8, vorzusehen. Hierdurch soll eine gute Verteilung der Schraubkräfte auf die von den Rippen gebildeten Senkschneiden ermöglicht werden. Bei der letzteren Druckschrift handelt es sich darum, den Rippen eine Gestaltung nach Art eines Fräsers zu geben. Bei beiden Senkschrauben erstrecken sich sämtliche Rippen vom Außenrand des Schraubenkopfes bis zum Schraubenschaft.

Das Dokument US-A-3 370 631 zeigt eine durch Druckgießen hergestellte Senkkopfschraube mit wechselweise zwei kurzen und einer Langen radial verlaufenden Rippen.

Bei gattungsgemäßen Senkschrauben handelt es sich um ein Massenprodukt, das mit Werkzeugen hergestellt wird, die eine hohe Standzeit aufweisen müssen. Dabei erfolgt die Kaltverformung der Unterseite des Schraubenkopfes durch einen Prägevorgang. Hierauf hat die Gestaltung der Unterseite des Schraubenkopfes Rücksicht zu nehmen, da das Prägewerkzeug das negative Bild der Unterseite des Schraubenkopfes bildet und dementsprechend mit Erhöhungen und Vertiefungen ausgebildet sein muß, die dann beim Kaltverformen den Fluß des Materials des Schraubenkopfes verursachen und dabei hohen Belastungen ausgesetzt sind.

Der Erfindung liegt die Aufgabe zugrunde, die Senkkopfschraube hinsichtlich der konischen Unterseite ihres Schraubenkopfes so zu gestalten, daß bei Erzielung einer guten Zerspanung des zu befestigenden Werkstücks und günstigem Abfluß der Späne die Rippen eine Gestaltung aufweisen, die eine robuste, standfeste Formgebung für das Prägewerkzeug ermöglichen. Erfindungsgemäß geschieht dies dadurch, daß die Rippen in einer geraden Zahl vorhanden sind, von denen jede zweite Rippe an ihrem dem Schraubenschaft zugewandten Ende einen Absatz aufweist, der durch Kürzung der betreffenden Rippe gegenüber den benachbarten Rippen gebildet ist.

Aufgrund der Kürzung jeweils der zweiten Rippe ergibt sich eine Rippengestaltung, bei der zwischen zwei unverkürzten Rippen ein von diesen und dem Absatz der verkürzten Rippe gebildeter Freiraum entsteht, der in dem Bereich relativ groß ist, wo die dem Schraubenschaft zugewandten Enden der Rippen aufeinander zulaufen, so daß sich dort die Enden der Rippen sehr stark annähern würden, wenn nicht jede zweite Rippe gekürzt wäre. In diesen relativ großen Freiraum kann ein entsprechend großer Vorsprung des Prägewerkzeugs hineinragen, daß heißt, das Prägewerkzeug weist keine besonders schmalen Vorsprünge auf, die bei längerer Belastung zum Wegbrechen neigen. Die erfindungsgemäße Rippengestaltung erleichtert aber nicht nur die eine hohe Standzeit gewährleistende Formgebung des Prägewerkzeugs, sie führt darüberhinaus dazu, daß sich in den Freiräumen Späne beim Eindrehen der Senkkopfschraube in ein Werkstück ansammeln können, die sonst abfließen müßten bzw. aufgrund ihres Volumens einen unerwünschten Druck auf das Material des Werkstücks ausüben könnten.

Zweckmäßig wählt man die sich an den Absatz anschließende Länge der betreffenden Rippe so, daß diese Länge etwa 2/3 der Länge der benachbarten Rippen entspricht. Bei dieser Länge kann die gekürzte Rippe vor allen Dingen in ihrem äußeren Bereich voll an der Zerspanung des Materials des Werkstücks beim Eindrehen der Senkkopfschraube teilnehmen und das in diesem Bereich zerspante Material mit den von innen her zugewanderten Spänen abtransportieren, während im radial inneren Bereich das dort zerspante Material weitgehend in den vorstehend erwähnten Freiräumen verbleiben kann, so daß in diesem Bereich ein wesentlich geringeres Volumen an Spänen abzufördern ist.

Die hier behandelte Senkkopfschraube wird häufig dazu verwendet, eine das Werkstück bildende Platte an irgendeinem Träger anzuschrauben. Wenn dabei die Platte dicker ist als der Schraubenkopf der Senkkopfschraube, dann ist es zweckmäßig, die ungekürzten Rippen soweit bis in den Bereich des Schraubenschaftes zu verlängern, daß sie sich bis in das Ende des Schraubenschaftes erstrecken, also auch im Bereich des Schraubenschaftes eine Zerspanung des Materials im Sinne einer Erweiterung des Durchgangsloches für die Schraube schaffen. Wenn dagegen die Platte nur so dick oder dünner als der Schraubenkopf ist, dann genügt es, wenn die ungekürzten Rippen mit ihrem dem Schraubenkopf abgewandten Ende in dessen konische Unterseite übergehen bzw. im Übergang von Schraubenschaft und konischer Unterseite enden. In diesem Falle nimmmt der Schraubenkopf eine Zerspanung in dem Werkstück vor, die den gesamten Schraubenkopf aufnimmt, wobei das an den Schraubenkopf ansetzende Ende des Schraubenschaftes dann unmittelbar aus der Platte herausragt und in den Träger für die Platte übergeht.

Für die Erstreckung der Rippen gibt es verschiedene Möglichkeiten. Zunächst kann man die Rippen radial verlaufen lassen. Ein geradlinig radialer Verlauf der Rippen erleichtert die Herstellung des Formwerkzeugs für die Kaltverformung. Es ist aber auch möglich, bei Erhalt der Geradlinigkeit der Rippen, diese jeweils im wesentlichen parallel zu ihrer Mittellinie versetzt anzuordnen. Geschieht dies in Eindrehrichtung, lässt sich damit die Förderwirkung der Rippen auf die Späne verbessern.

Einen ähnlichen Effekt erzielt man dann, wenn die Rippen in Eindrehrichtung eine konkave Schneide bilden. Abgesehen von einer gerundeten Ausführung kann man hierfür die Rippen auch aus zwei geradlinigen, über einen Knick aneinander anschließenden Teilen gestalten.

Insbesondere bei lockerem Material des betreffenden Werkzeugstücks kann es sinnvoll sein, die Späne bewußt nicht abzuführen, sondern zur Verdichtung des Materials im Bereich des Schraubenkopfes in das Material des Werkstücks einzupressen. Hierzu gibt man den Rippen in Eindrehrichtung der Schraube eine konkave Form. Im Falle der Verwendung der oben erwähnten parallel versetzten Rippen können diese entgegen der Eindrehrichtung versetzt werden, so daß von den Rippen die Späne radial nach innen gefördert werden.

Je nach dem, ob es erwünscht ist unterhalb des Schraubenkopfes mehr oder weniger Material zu zerspanen, kann man die Außenflächen der Rippen entsprechend gestalten. Man kann diese geradlinig verlaufen lassen, wobei weniger Material zerspant wird als wenn man die Außenflächen der Rippen gewölbt verlaufen läßt. In diesem Falle ergibt sich eine erhöhte Zerspanung.

Wenn es erwünscht ist, dem Schraubenkopf eine gegenüber der betreffenden Außenfläche des Werkstücks größere Absenkung zu geben, kann man den Schraubenkopf mit einem wesentlichen zylindrischen Rand versehen, der sich über die betreffenden Enden der Rippen fortsetzt. In diesem Falle wird von den Enden der Rippen ein zylindrischer Auslauf der konischen Senkung geschnitten, in die sich der Schraubenkopf absenken kann und damit gegebenenfalls mit seiner Außenfläche tiefer liegt als die Oberfläche des entsprechenden Werkstücks.

In den Figuren sind Ausführungsbeispiele der Erfindung dargestellt. Es zeigen
- Fig. 1: eine Senkkopfschraube in Seitensicht,
- Fig. 2: die gleiche Senkkopfschraube in einem Schnitt gemäß der Linie A-B aus Figur 1,
- Fig. 3: eine Seitenansicht einer Senkkopfschraube mit in die konische Unterseite des Schraubenkopfes übergehenden Enden der Rippen,
- Fig. 4: eine Seitenansicht einer Senkkopfschraube mit sich bis in das Ende des Schraubenschaftes erstreckenden Rippen,
- Fig. 5: eine Seitenansicht der Senkkopfschraube mit parallel zum Schraubenschaft verlängerten Rippen,
- Fig. 6: einen Schnitt ähnlich demjenigen gemäß Figur 2 mit versetzten Rippen,
- Fig. 7: einen Schnitt ähnlich demjenigen gemäß Figur 2 mit gebogenen Rippen,
- Fig. 8: einen Schnitt ähnlich demjenigen gemäß Figur 2 mit abgeknickten Rippen.

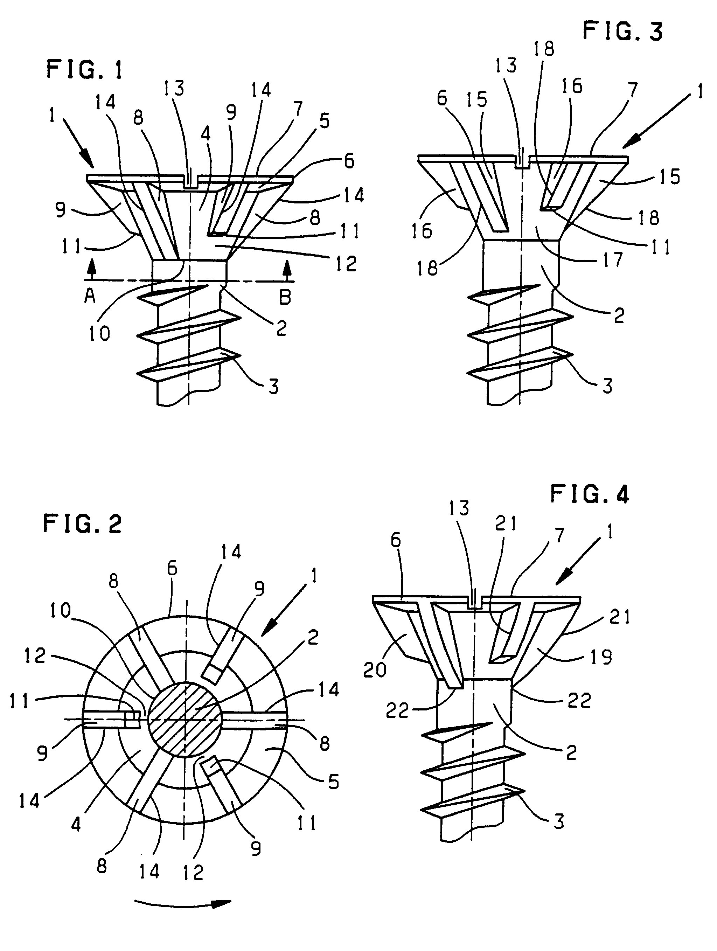

Figur 1 zeigt die Seitensicht einer Senkkopfschraube mit dem Schraubenkopf 1, an den sich der Schraubenschaft 2 mit dem Gewinde 3 anschließt. Der Schraubenkopf 1 weist eine konische Unterseite mit dem an den Schraubenschaft 2 anschließenden Konus 4 und dem darauffolgenden Konus 5 auf, welch letztere in den zylindrischen Rand 6 an der Oberseite 7 des Schraubenkopfes übergeht. An der Unterseite des Schraubenkopfes 1 sind mehrere Rippen 8 und 9 angebracht, und zwar wie aus der weiter unten erläuterten Figur 2 ersichtlich drei längere Rippen 8 und drei kürzere Rippen 9. Die Rippen 8 und 9 sind aus dem Material des Schraubenkopfes 1 durch Kaltverformung herausgeprägt. Die Rippen 8 erstrecken sich von dem Rand 6 bis zu der Kante 10, an der der Konus 4 an den Schraubenschaft 2 anstößt.

Die kürzeren Rippen 9 enden auf ihrer dem Schraubenschaft 2 zugewandten Seite in dem Absatz 11, durch den die Länge der Rippen 9 begrenzt ist. Aufgrund des Vorhandenseins dieses Absatzes 11 entsteht zwischen den beiden benachbarten Rippen 8 ein Freiraum 12 (siehe auch Figur 2), der sich günstig auf die Gestaltung des den Schraubenkopf 1 ausprägenden Formwerkzeuges auswirkt, da dieses das negative Bild der Unterseite des Schraubenkopfes 1 bildet. In diesem negativen Bild sind zur Ausformung der zwischen den Rippen 8 und 9 vorhandenen Zwischenräume Vorsprünge am Formwerkzeug vorzusehen, von denen jeweils die seitlich neben einer kürzeren Rippe 9 vorhandenen Vorsprünge des Formwerkzeugs über eine den Freiraum 12 ausfüllende Brücke im Formwerkzeug verbunden sind. Das Formwerkzeug erhält hierdurch eine hohe Stabilität und damit auch eine entsprechend hohe Standzeit. Die Lange der kürzeren Rippen 9 entspricht etwa 2/3 der Länge der benachbarten längeren Rippen 8. Es sei noch darauf hingewiesen, daß, wie die Figur 1 zeigt, der Schraubenkopf 1 mit dem Schlitz 13 für einen Schraubendreher mit Klinge versehen ist. Anstelle des Schlitzes 13 kann natürlich auch irgend eine andere Werkzeugaufnahme verwendet werden, z.B. einen Kreuzschlitz.

Figur 2 zeigt einen Schnitt gemäß der Linie A-B in Figur 1, sie zeigt somit die Unterseite des Schraubenkopfes 1 mit den symmetrisch angeordneten kürzeren Rippen 9 und den längeren Rippen 8, die jeweils um den gleichen Winkel zueinander versetzt angeordnet sind. Die längeren Rippen 8 reichen dabei vom Rand 6 bis zur Kante 10, bei der der Konus 4 in den Schraubenschaft 2 übergeht. Die kürzeren Rippen 9 enden auf ihrer dem Schraubenschaft 2 zugewandten Seite in den Absätzen 11, die hier, wie auch die Figur 1 zeigt, leicht abgeschrägt verlaufen, um das Fließen des Materials des Schraubenkopfes 1 bei der Kaltumformung zu erleichtern.

Beim Eindrehen der in den Figuren 1 und 2 dargestellten Senkkopfschraube gemäß der in Figur 2 eingezeichneten Pfeilrichtung schneiden die vorderen Senkschneiden 14 der Rippen 8 und 9 Material aus dem Werkstück heraus, wie dies sonst mittels eines Senkers erforderlich ist. Der Schraubenkopf 1 übernimmt damit also die Rolle eines Senkers. Die von den Senkschneiden 14 aus dem Material des betreffenden Werkstücks herausgeschnittenen Späne können sowohl in radialer Richtung neben den Rippen 8 und 9 abfließen, sie können sich aber auch in den Freiräumen 12 vor den Absätzen 11 aufstauen, wobei sie den hier vorhandenen Freiraum 12 ausnützen.

Figur 3 zeigt die Seitensicht einer Senkkopfschraube mit einem Schraubenkopf 1, dessen ungekürzte Rippen 15 an ihrem dem Schraubenschaft 2 zugewandten Ende in die Unterseite des Schraubenkopfes 1 übergehen, der hier durch den einzigen Konus 17 gebildet ist. Es handelt sich also um eine Ausführungsform, bei der mit dem Eindrehen der Senkkopfschraube der Schraubenkopf mit den Senkschneiden 18 erst dann mit dem betreffenden Werkstück in Kontakt tritt, wenn sich der Konus 17 ein kurzes Stück in das Material des betreffenden Werkstücks eingedrückt hat. Dies ist dann von Vorteil, wenn man das betreffende Werkstück in das der Schraubenkopf zu versenken ist, aus einer relativ dünnen Platte besteht.

In Figur 4 ist eine weitere Ausführungsform einer Senkkopfschraube in Seitensicht dargestellt, bei der die Außenflächen mit ihren Senkschneiden 21 der Rippen 19 und 20 nach außen gewölbt verlaufen. Hierdurch wird etwas mehr Material aus dem betreffenden Werkstück herausgeschnitten, als ansich für eine Senkung notwendig ist, was dann von Vorteil ist, wenn der Schraubenkopf 1 bis unter die Oberfläche des betreffenden Werkstücks etwas abgesenkt werden soll. Die ungekürzten Rippen 20 verlaufen hier von dem Rand 6 bis in den Bereich des Schraubenschaftes 2 hinein, wobei ihr betreffendes Ende 22 ein kurzes Stück über dem Schraubenschaft 2 verläuft.

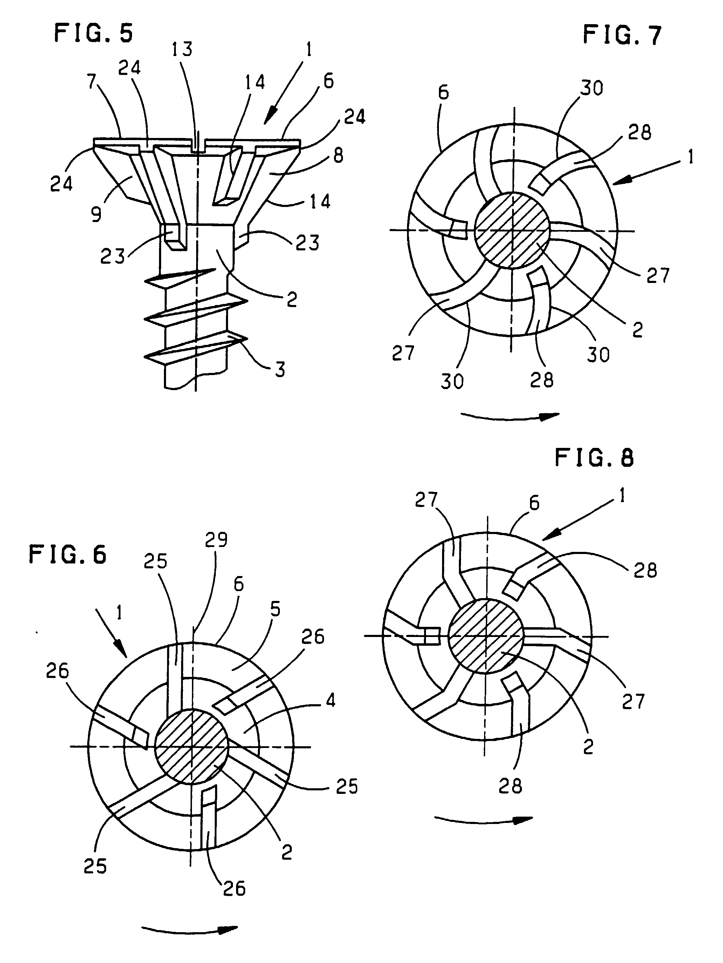

In Figur 5 ist eine Abwandlung der Gestaltung gemäß Figur 4 dargestellt, bei der das den Schraubenschaft 2 überdeckende Ende 23 parallel zum Schraubenschaft 2 verläuft, das heißt im Bereich des Endes 23 wird aus dem Material des betreffenden Werkstücks eine zylindrische Bohrung herausgeschnitten, deren Durchmesser etwa dem Durchmesser des Gewindes 3 entspricht, so daß sich damit in dem betreffenden Werkstück ein Durchgangsloch für das Gewinde 3 ergibt. Der zylindrische Rand 6 des Schraubenkopfes 1 ist hier gleichzeitig die Begrenzung 24 für die betreffenden Enden der Rippen 8 und 9. Diese Enden liegen mit ihren Begrenzungen 24 in einer zylindrischen Umhüllenden, die mit dem den Rand 6 bildenenden Zylinder übereinstimmt. Aufgrund dieser Gestaltung der Rippen 8 und 9 wird eine entsprechende zylindrische Ausnehmung beim Eindrehen des Schraubenkopfes in ein Werkstück eingeschnitten, in die sich der Schraubenkopf absenkt, womit dessen Oberseite 7 gegenüber der Oberfläche des betreffenden Werkstücks entsprechend abgesenkt wird.

In Figur 6 ist ein Schraubenkopf 1 ähnliche Darstellung gemäß Figur 2 gezeigt, bei dem unverkürzte Rippen 25 und verkürzte Rippen 26 jeweils im wesentlichen parallel zu einer vertikalen Mittellinie 29 versetzt verlaufen. Aufgrund dieser Anordnung der Rippen 25 und 26 ergibt sich bei Eindrehen des Schraubenkopfes 1 in ein Werkstück in der eingezeichneten Pfeilrichtung die Tendenz für die zwischen den Rippen fließenden Späne, daß diese nach außen gefördert werden.

Eine ähnliche Gestaltung ist in Figur 7 dargestellt, bei der die Rippen 27 und 28 mit ihren Senkschneiden 30 unter Zugrundelegung der durch die Pfeilrichtung angedeutete Eindrehrichtung konvex verlaufen und damit zwischen den Rippen 27 und 28 liegenden Spänen die Tendenz geben, nach außen wegzugleiten.

Figur 8 zeigt eine Abwandlung gegenüber der Gestaltung gemäß Figur 7, bei der die Rippen 27 und 28 mit einem Knick versehen sind, was für die Erstellung des betreffenden Formwerkzeugs von Vorteil ist.

Es sei noch darauf hingewiesen, daß die Rippen 27 und 28 gemäß den Figuren 7 und 8 konkav gestaltet werden können, womit sich der Effekt ergibt, daß sich das von ihnen herausgeschnittene Spanmaterial nach innen zu verdichtet, also nicht nach außen gefördert wird, was für verschiedene Anwendungsfälle, insbesondere bei lockerem Material des Werkstücks, von Vorteil sein kann.

## Patentansprüche

1. Senkkopfschraube mit an der konischen Unterseite ihres Schraubenkopfes (1) angeordneten, gegenüber der Unterseite vorspringenden, in gerader Anzahl vorhandenen Rippen (8,9; 15,16; 19,20; 25,26; 27,28)mit Senkschneiden (14,18,21,30), **dadurch gekennzeichnet,** daß jede zweite Rippe (9,16,20,26,28) an ihrem dem Schraubenschaft (2) zugewandten Ende einen Absatz (11) aufweist, der durch Kürzung der betreffenden Rippe (9,16,20,26,28) gegenüber den benachbarten Rippen (8,15,19,25,27) gebildet ist.

2. Senkkopfschraube nach Anspruch 1, **dadurch gekennzeichnet,** daß sich an den Absatz (11) eine Länge der betreffenden Rippe (9) anschließt, die etwa 2/3 der Länge der benachbarten Rippen (8) entspricht.

3. Senkkopfschraube nach Anspruch 1 oder 2, **dadurch gekennzeichnet,** daß die ungekürzten Rippen (19) bis in den Bereich des Schraubenschaftes (2) verlängert sind.

4. Senkkopfschraube nach Anspruch 3, **dadurch gekennzeichnet**, daß die ungekürzten Rippen (15) mit ihrem dem Schraubenkopf (2) abgewandten Ende in dessen konische Unterseite (17) übergehen.

5. Senkkopfschraube nach Anspruch 3, **dadurch gekennzeichnet**, daß die ungekürzten Rippen (8) mit ihrem dem Schraubenkopf (1) abgewandten Ende im Übergang von Schraubenschaft (2) und konischer Unterseite (4) enden.

6. Senkkopfschraube nach Anspruch 3, **dadurch gekennzeichnet,** daß die Rippen (19) sich bis in das Ende des Schraubenschaftes (2) erstrekken.

7. Senkkopfschraube nach Anspruch 6, **dadurch gekennzeichnet,** daß die Rippen (8) im Bereich ihrer Erstreckung am Ende des Schraubenschaftes (2) parallel zum Schraubenschaft (2) verlaufen.

8. Senkkopfschraube nach einem der Ansprüche 1 bis 7, **dadurch gekennzeichnet,** daß die Rippen (8,9) radial verlaufen.

9. Senkkopfschraube nach einem der Ansprüche 1 bis 7, **dadurch gekennzeichnet,** daß die Rippen (25,26) jeweils im wesentlichen parallel zu einer vertikalen Mittellinie (29) versetzt verlaufen.

10. Senkkopfschraube nach einem der Ansprüche 1 bis 7, **dadurch gekennzeichnet,** daß die Rippen (27,28) in Eindrehrichtung der Schraube eine konkave oder konvexe Senkschneide (30) bilden.

11. Senkkopfschraube nach Anspruch 10, **dadurch gekennzeichnet,** daß die Rippen (27,28) aus zwei geradlinigen, über einen Knick anschließenden Teilen bestehen.

12. Senkkopfschraube nach einen der Ansprüche 1 bis 11, **dadurch gekennzeichnet,** daß die Außenflächen der Rippen (8,9; 15,16) geradlinig verlaufen.

13. Senkkopfschraube nach einen der Ansprüche 1 bis 11, **dadurch gekennzeichnet,** daß die Außenflächen der Rippen (19,20) nach außen gewölbt verlaufen.

14. Senkkopfschraube nach einem der Ansprüche 1-13, **dadurch gekennzeichnet,** daß der Schraubenkopf (1) einen im wesentlichen zylindrischen Rand (24) aufweist der sich über die betreffenden Enden der Rippen (8,9) fortsetzt.

## Claims

1. Countersunk head screw with an even number of ribs (8, 9; 15, 16; 19, 20; 25, 26; 27, 28) with countersunk cutting edges (14, 18, 21, 30) arranged on the conical underside of its screw head (1) and projecting relative to this underside, characterised in that every second rib (9, 16, 20, 26, 28) is provided at its end directed towards the screw shank (2) with a shoulder (11) formed by shortening the relevant rib (9, 16, 20, 26, 28) relative to the adjacent ribs (8, 15, 19, 25, 27).

2. Countersunk head screw according to claim 1, characterised in that the shoulder (11) is followed by a length of the relevant rib (9) corresponding to approximately 2/3 of the length of the adjacent ribs (8).

3. Countersunk head screw according to claim 1 or claim 2, characterised in that the unshortened ribs (19) are extended into the region of the screw shank (2).

4. Countersunk head screw according to claim 3, characterised in that the unshortened ribs (15) pass over via their ends remote from the screw head (1) into the conical underside (17) thereof.

5. Countersunk head screw according to claim 3, characterised in that the unshortened ribs (8) end via their ends remote from the screw head (1) in the transition between the screw shank (2) and the conical underside (4).

6. Countersunk head screw according to claim 3, characterised in that the ribs (19) extend into the end of the screw shank (2).

7. Countersunk head screw according to claim 6, characterised in that the ribs (8) extend parallel to the screw shank (2) in the region in which they extend at the end of the screw shank (2).

8. Countersunk head screw according to one of claims 1 to 7, characterised in that the ribs (8, 9) extend radially.

9. Countersunk head screw according to one of claims 1 to 7, characterised in that the ribs (25, 26) extend in an offset manner substantially parallel to a vertical centre line (29).

10. Countersunk head screw according to one of claims 1 to 7, characterised in that the ribs (27, 28) form a concave or convex countersunk cutting edge (30) in the screwing-in direction of the screw.

11. Countersunk head screw according to claim 10, characterised in that the ribs (27, 28) consist of two rectilinear parts connected together via a bend.

12. Countersunk head screw according to one of claims 1 to 11, characterised in that the outer surfaces of the ribs (8, 9; 15, 16) extend in a rectilinear manner.

13. Countersunk head screw according to one of claims 1 to 11, characterised in that the outer surfaces of the ribs (19, 20) are curved towards the outside.

14. Countersunk head screw according to one of claims 1-13, characterised in that the screw head (1) has a substantially cylindrical rim (24) which continues beyond the relevant ends of the ribs (8, 9).

## Revendications

1. Vis à tête fraisée comportant un nombre pair d'ergots (8, 9 ; 15, 16 ; 19, 20 ; 25, 26 ; 27, 28) agencés sur le dessous conique de sa tête de vis (1), saillants par rapport au dessous et comportant des tranchants de fraisage (14, 18, 21, 30), caractérisée en ce qu'un ergot sur deux (9, 16, 20, 26, 28) comporte à son extrémité proche de la tige de vis (2) un gradin (11) qui est formé par le raccourcissement de l'ergot considéré (9, 16, 20, 26, 28) par rapport à l'ergot voisin (8, 15, 19, 25, 27).

2. Vis à tête fraisée selon la revendication 1, caractérisée en ce que le gradin (11) est suivi d'une longueur de l'ergot considéré (9) qui est égale à environ 2/3 de la longueur de l'ergot voisin (8).

3. Vis à tête fraisée selon la revendication 1 ou 2, caractérisée en ce que les ergots non raccourcis (19) sont prolongés jusque dans la zone de la tige de vis (2).

4. Vis à tête fraisée selon la revendication 3, caractérisée en ce que les ergots non raccourcis (15) se terminent avec leur extrémité éloignée de la tête de vis (2) en passant dans le dessous conique (17) de celle-ci.

5. Vis à tête fraisée selon la revendication 3, caractérisée en ce que les ergots non raccourcis (8) se terminent avec leur extrémité éloignée de la tête de vis (1) à la transition entre la tige de vis (2) et le dessous conique (4).

6. Vis à tête fraisée selon la revendication 3, caractérisée en ce que les ergots (19) s'étendent jusque dans l'extrémité de la tige de vis (2).

7. Vis à tête fraisée selon la revendication 6, caractérisée en ce que les ergots (8) dans la zone de leur extension à l'extrémité de la tige de vis (2) s'étendent parallèlement à la tige de vis (2).

8. Vis à tête fraisée selon l'une des revendications 1 à 7, caractérisée en ce que les ergots (8, 9) s'étendent radialement.

9. Vis à tête fraisée selon l'une des revendications 1 à 7, caractérisée en ce que les ergots (25, 26) s'étendent chacun globalement parallèle à une ligne médiane (29) verticale et décalé par rapport à celle-ci.

10. Vis à tête fraisée selon l'une des revendications 1 à 7, caractérisée en ce que les ergots (27, 28) forment dans le sens de vissage de la vis un tranchant de fraisage (30) concave ou convexe.

11. Vis à tête fraisée selon la revendication 10, caractérisée en ce que les ergots (27, 28) sont constitués de deux parties rectilignes raccordées par un coude.

12. Vis à tête fraisée selon l'une des revendications 1 à 11, caractérisée en ce que les surfaces extérieures des ergots (8, 9 ; 15, 16) sont rectilignes.

13. Vis à tête fraisée selon l'une des revendications 1 à 11, caractérisée en ce que les surfaces extérieures des ergots (19, 20) sont cintrées vers l'extérieur.

14. Vis à tête fraisée selon l'une des revendications 1 à 13, caractérisée en ce que la tête de vis (1) comporte un bord (24) globalement cylindrique qui se prolonge au-delà des extrémités concernées des ergots (8, 9).
